# EUROPEAN PATENT SPECIFICATION

(11) **EP 1 500 594 B1**
(45) Date of publication and mention of the grant of the patent: **21.02.2007**
(21) Application number: 03425499.5
(22) Date of filing: 25.07.2003
(51) Int. Cl.: B65B 41/18, B65B 61/24

(54) **Forming method and unit for producing sealed packages of pourable food products from a tube of sheet packaging material**
Verfahren und Vorrichtung zur Herstellung von gesiegelten Verpackungen mit fliessfähigen Nahrungsmitteln aus einer Tube aus Verpackungsfolie
Procédé et dispositif pour former des emballages scellés contenant des produits alimentaires fluides à partir d'un tube formé d'un film d'emballage

(43) Date of publication of application: 26.01.2005
(73) Proprietor: Tetra Laval Holdings & Finance SA, 1009 Pully (CH)
(72) Inventor: Fontanazzi, Paolo, 41100 Modena (IT); Caselli, Stefano, 41100 Modena (IT)
(74) Representative: Franzolin, Luigi

(56) References cited:
- EP-A- 0 887 265
- GB-A- 686 078

## Description

The present invention relates to a forming method for producing sealed packages of pourable food products from a tube of sheet packaging material, and to a forming unit implementing said method.

Many pourable food products, such as fruit juice, pasteurized or UHT (ultra-high-temperature-treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing a web of laminated packaging material.

The packaging material has a multilayer structure comprising a layer of paper material covered on both sides with layers of heat-seal plastic material, e.g. polyethylene, and, in the case of aseptic packages for long-storage products, such as UHT milk, also comprises a layer of oxygen-barrier material, defined, for example, by aluminium foil, which is superimposed on a layer of heat-seal plastic material, and is in turn covered with another layer of heat-seal plastic material eventually defining the inner face of the package contacting the food product.

As is known, such packages are produced on fully automatic packaging machines, on which a continuous tube is formed from the web-fed packaging material. More specifically, the web of packaging material is unwound off a reel and fed through an aseptic chamber of the packaging machine, where it is sterilized, e.g. by applying a sterilizing agent, such as a hydrogen peroxide, which is later removed by heating, and/or by subjecting the packaging material to radiation of appropriate wavelength and intensity; and the web so sterilized is kept in a closed, sterile environment, and is folded into a cylinder and sealed longitudinally to form a continuous tube in known manner.

The tube of packaging material, which thus forms an extension of the aseptic chamber, is fed continuously in a vertical direction, is filled with the sterilized or sterile-processed food product, and is fed through a forming unit for producing individual packages. That is, inside the forming unit, the tube is sealed along equally spaced transverse sections to form a continuous strip of pillow packs connected to one another by respective transverse sealing bands, i.e. extending crosswise to the travelling direction of the tube; and the pillow packs are separated by cutting the relative transverse sealing bands, and are then fed to a folding station where they are folded mechanically to form respective finished parallelepiped-shaped packages.

As described, for example, in European Patent EP-B-0887265, forming units are known comprising two chain conveyors defining respective endless paths and supporting respective numbers of jaws. The two paths have respective branches substantially facing and parallel to each other, and between which the tube of packaging material fed, so that the jaws on one conveyor cooperate with corresponding jaws on the other conveyor along said branches of the respective paths to grip the tube at a number of successive cross sections and seal and cut the packages.

That is, each jaw on one conveyor defines, with the corresponding jaw on the other conveyor, a respective sealing assembly which interacts cyclically with the tube of packaging material.

The portion of the tube gripped between each pair of jaws is typically sealed by heating means carried on one of the jaws and for locally melting the layers of heat-seal plastic material gripped between the jaws.

Forming units are also known which only comprise two pairs of jaws, which act alternately on the tube of packaging material to grip and seal, e.g. heat seal, it along a number of equally spaced cross sections.

Once sealing is completed, a cutting member, carried by one of the jaws and interacting with the tube of packaging material, is activated to cut the tube along the centreline of the sealed cross section and so detach a pillow pack from the bottom end of the tube of packaging material. Since the bottom end is sealed transversely, the relative jaws, on reaching the bottom dead-centre position, can be opened to avoid interfering with the upper portion of the tube; and, at the same time, the other pair of jaws, operating in the same way, moves down from a top dead-centre position to repeat the gripping/forming, sealing and cutting operations as described above.

One problem posed by known forming units has to do with the so-called "decoration correction" system.

That is, the web of packaging material normally has a series of equally spaced printed images or decorations on the portions eventually defining the outer surfaces of the packages, so that the web must be fed to the forming unit in such a manner as to "register" the package forming, sealing and cutting operations with respect to the sequence of decorations. Though the printed decorations are equally spaced, the position of each with respect to the position of the forming unit jaws may vary, firstly on account of varying deformation of the packaging material by the mechanical pressures exerted on it by the jaws, and secondly due to the pulsating pressure of the pourable food product inside the tube of packaging material. A system for correcting the decoration position is therefore required, in that, on high-speed packaging machines, even minute deviations from the theoretical register position of the decorations, if not corrected immediately, may escalate and eventually result in the production of unacceptable packages which must be rejected.

On modern packaging machines, such a system comprises an optical sensor for detecting the position of a marker, such as a bar code, a pour hole, or a fold line, repeated at regular intervals on the web of packaging material eventually forming the fill tube; and a control unit for comparing the detected position of the marker with a theoretical position.

On some commercial machines, each two interacting jaws are combined with two traction members, which exert adjustable pull on opposite sides of the tube of packaging material to correct its vertical feed. The traction members are activated after the relative jaws grip the tube of packaging material, and before the next two jaws act on the upstream cross section of the tube.

The traction members are normally fitted movably to one of the jaws in each pair, and are movable by varying amounts between two limit positions.

On detecting a decoration position error, the control unit adjusts the speed of the web feed motor. If this is not enough, the traction members are activated to adjust their travel so as to slightly increase or reduce pull on the packaging material. In other solutions, the control unit acts directly on the traction members, with no possibility of adjusting the speed of the web feed motor; and the operation is repeated until the decoration and theoretical positions match.

In addition to correcting feed of the tube of packaging material, the traction members also simultaneously fold the packaging material towards the cross section gripped between the relative jaws, so as to form triangular tabs at the top and bottom end corners of the pillow packs.

To correct the decoration position with respect to the position of the two jaws interacting with the tube of packaging material, the traction members are moved by varying amounts between the two limit positions, and only perform a complete movement in particular conditions. As a result, the traction members fail to ensure optimum folding and forming of the packaging material towards the section gripped between the relative pair of jaws, i.e. at the ends of the pillow packs, which in fact can only be achieved by always moving the traction members as close as possible to the underlying sealing portion of the tube.

It is an object of the present invention to provide a forming method for producing sealed packages of pourable food products from a tube of sheet packaging material, designed to control and correct vertical feed of the tube, and also to ensure optimum folding and forming of the ends of the pillow packs.

According to the present invention, there is provided a forming method for producing sealed packages of pourable food products from a tube of sheet packaging material, as claimed in Claim 1.

The present invention also relates to a forming unit implementing said method, and as claimed in Claim 4.

A preferred, non-limiting embodiment of the present invention will be described by way of example with reference to the accompanying drawings, in which:
Figure 1 shows a view in perspective, with parts removed for clarity, of a forming unit in accordance with the teachings of the present invention;
Figure 2 shows a partial schematic elevation of the Figure 1 unit;
Figures 3 and 4 show views in perspective, from opposite sides, of a jaw of the Figure 1 unit;
Figure 5 shows a schematic front view of a jaw cooperating with the packaging material, of a packaging material decoration register control device;
Figures 6, 7 and 8 show partial schematic elevations, with parts removed for clarity, of a jaw and a cam assembly forming part of the Figure 5 control device, in three different operating conditions;
Figure 9 shows a larger-scale view in perspective of the cam assembly in Figures 6, 7 and 8.

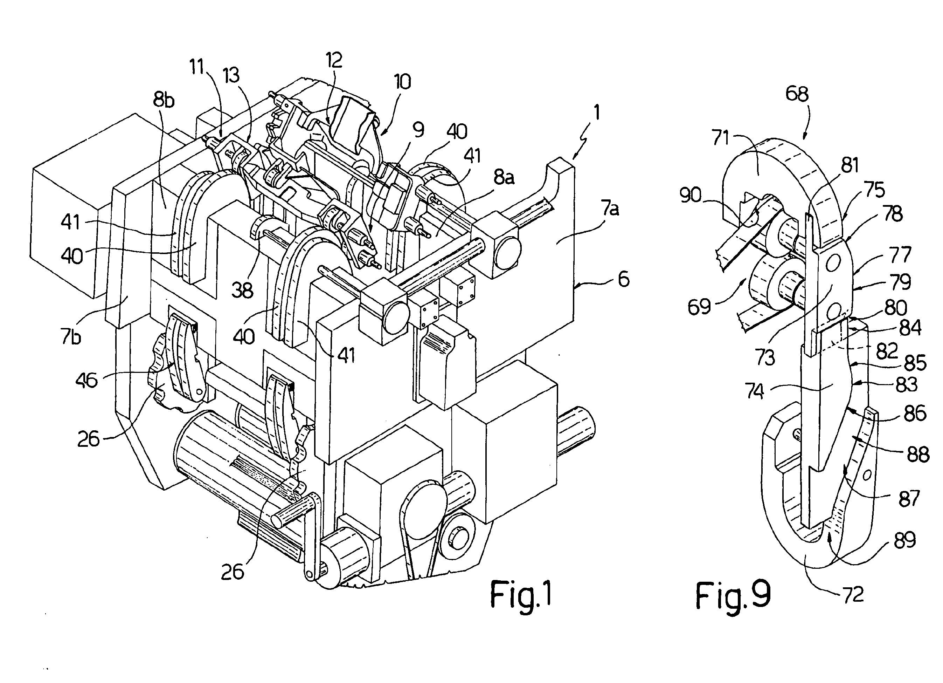

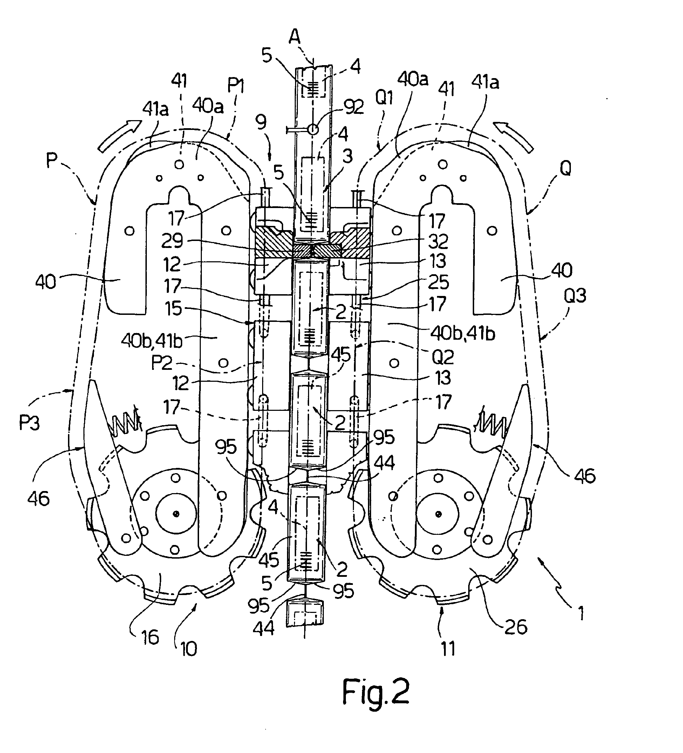

Number 1 in Figures 1 and 2 indicates as a whole a forming unit for continuously producing sealed packages 2 of a pourable food product, such as pasteurized or UHT milk, fruit juice, wine, etc., from a tube 3 of packaging material.

Tube 3 is formed in known manner upstream from unit 1 by longitudinally folding and sealing a web of heat-seal sheet material, and is filled with the sterilized or sterile-processed food product for packaging.

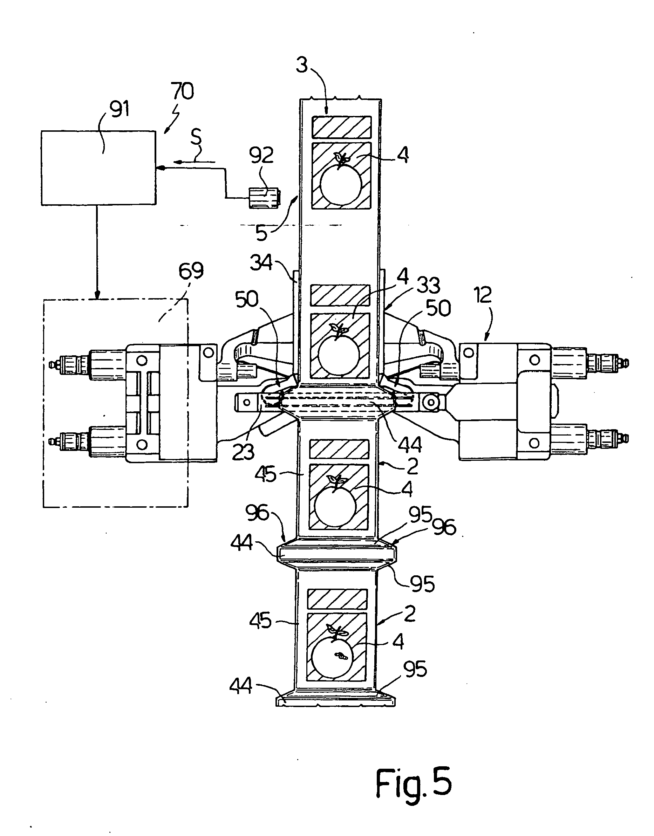

The packaging material of tube 3 is printed beforehand with a succession of identical, equally spaced decorations 4 (Figure 5) on the portions of the material eventually forming the outer surfaces of packages 2; and each decoration 4 comprises a bar code 5 (Figure 2).

Unit 1 comprises a frame 6 (Figure 1) defined by two sides 7a, 7b, and by two parallel transverse walls 8a, 8b fixed rigidly between sides 7a, 7b and defining, with sides 7a, 7b, a gap 9; and two chain conveyors 10, 11 supported by frame 6 and having respective jaws 12, 13 (only one pair shown in Figure 1) which cooperate with each other and interact with the tube 3 of packaging material fed along a vertical path A through gap 9.

Conveyors 10, 11 define respective endless paths P, Q, along which jaws 12, 13 travel, and which extend about respective walls 8a, 8b of frame 6.

Conveyor 10 comprises an articulated chain 15 extending along path P; and two drive wheels 16 meshing with both sides of chain 15 at the bottom end of path P. Jaws 12 are an integral part, and form alternate links, of chain 15, and are connected to one another in articulated manner by pairs of rods 17.

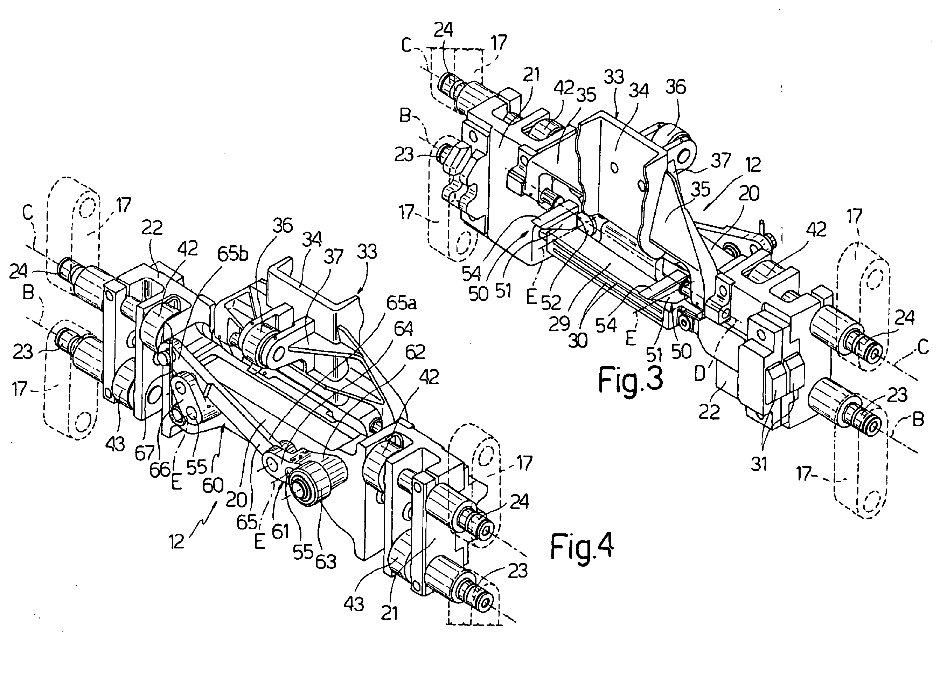

More specifically (Figures 3 and 4), each jaw 12 comprises a main body 20, which is elongated perpendicularly to path A, is parallel to wall 8b, and has respective end enlargements 21, 22, each having a projecting first and second pin 23, 24 with respective axes B, C spaced apart and parallel to the major dimension of body 20. Rods 17 articulate on pins 23, 24 of jaws 12, so as to connect pins 23 of one jaw 12 to pins 24 of the adjacent jaw 12.

Similarly, conveyor 11 comprises an articulated chain 25 extending along path Q; and two drive wheels 26 meshing with chain 25 at the bottom end of path Q. Chain 25 is defined by a number of jaws 13 connected to one another in articulated manner and only described in detail as regards features differing from those of jaws 12. Parts of jaws 13 identical or corresponding to those of jaws 12 are indicated using the same reference numbers. Briefly, each jaw 13 comprises a main body 20 having pairs of end pins 23, 24, on which articulate rods 17 connecting adjacent pairs of jaws 13.

Each jaw 12 (Figure 3) comprises an induction heating member 29 fitted to main body 20, crosswise to path A of tube 3. Heating member 29 comprises two straight parallel active surfaces 30, and is powered electrically by two contact brushes 31 which, in use, cooperate in sliding manner with a power bar (not shown) fitted to frame 6 and extending along the portion of path P inside gap 9.

Instead of heating member 29, each jaw 13 comprises a pressure bar 32, which cooperates with heating member 29 of corresponding jaw 12 to grip a cross section of tube 3 (Figure 2). On a front surface facing corresponding jaw 12 in use (Figure 1), bar 32 is fitted in known manner with two strips of relatively flexible elastomeric material, which cooperate with the packaging material in opposition to active surfaces 30 of heating member 29.

In other words, each jaw 12 on conveyor 10 defines with the corresponding jaw 13 on conveyor 11 a jaw assembly which interacts cyclically with tube 3 of packaging material.

Jaws 12 and 13 (Figures 1, 3, 4) also comprise respective devices 33 for controlling the volume of packages 2 as they are formed. Each device 33 - known, for example, from EP-B-0887265, and therefore not described in detail - substantially comprises a half-shell 34 hinged to main body 20 about an axis D parallel to axes B and C by means of two supporting brackets 35 integral with half-shell 34.

As shown in Figure 1, each half-shell 34 cooperates at the front with a complementary half-shell 34 to form a substantially parallelepiped-shaped cavity for housing a package 2 being formed; and each device 33 comprises a cam follower roller 36 fitted idly to a supporting bracket 37 fitted integrally to the back of relative half-shell 34.

Cam followers 36 of jaws 12 and 13 cooperate with respective cams 38 fitted to walls 8a and 8b of frame 6, and of which only the one relative to conveyor 11 is shown in Figure 1.

The movement of jaws 12 and 13 is controlled by respective pairs of cams 40, 41 fitted to walls 8a, 8b of frame 6 and cooperating with respective pairs of cam follower rollers 42, 43 fitted to end enlargements 21, 22 of jaws 12 and 13. The rollers 42, 43 in each pair are coaxial with respective pins 24, 23, and are offset axially with respect to each other so as to cooperate with respective cams 40, 41.

More specifically, wall 8a (Figure 1) is fitted with two pairs of cams 40, 41 which cooperate with respective pairs of rollers 42, 43 of jaws 12; and, similarly, wall 8b is fitted with two pairs of cams 40, 41 which cooperate with respective pairs of rollers 42, 43 of jaws 13.

Cams 40, 41 have respective substantially U-shaped portions 40a, 41a extending about top edges of respective walls 8a, 8b to define return portions for respective chains 15, 25 of conveyors 10, 11 opposite respective drive wheels 16, 26; and respective portions 40b, 41b extending along respective walls 8a, 8b inside gap 9. Portions 40a, 41a define portions P1, Q1 along which jaws 12 and 13 approach and contact tube 3 of packaging material; and portions 40b, 41b define facing, substantially parallel portions P2, Q2 of paths P, Q, along which jaws 12 and 13 are maintained contacting under pressure to form the seals defining packages 2 at respective substantially flat transverse sealing bands 44, thus forming a continuous strip defined by a number of parallelepiped-shaped container portions 45 connected to one another by sealing bands 44, which are cut along path P or downstream from unit 1 to form packages 2.

Cams 40, 41 release relative chains 15, 25 at respective portions P3, Q3 of paths P, Q, downstream from respective drive wheels 16, 26.

Along portions P3, Q3, chains 15, 25 cooperate with respective pairs of tensioners 46 for maintaining chains 15, 25 taut enough to ensure contact between rollers 42, 43 of jaws 12, 13 and relative cams 40, 41.

Each jaw 12 also comprises a pair of movable traction members 50, which interact with tube 3 of packaging material to feed it correctly along path A, and which are located over heating member 29 with reference to portion P2 of path P.

Traction members 50 (Figures 3, 5, 6, 7, 8) comprise respective traction tabs 51 located on opposite sides of path A of tube 3 and symmetrical with and adjacent to tube 3. Tabs 51 are integral with respective pins 52 having axes E perpendicular to path A and to the major dimension of heating member 29, extend substantially radially with respect to pins 52, and have respective lateral edges 54 substantially parallel to axes E of pins 52 and which cooperate with tube 3.

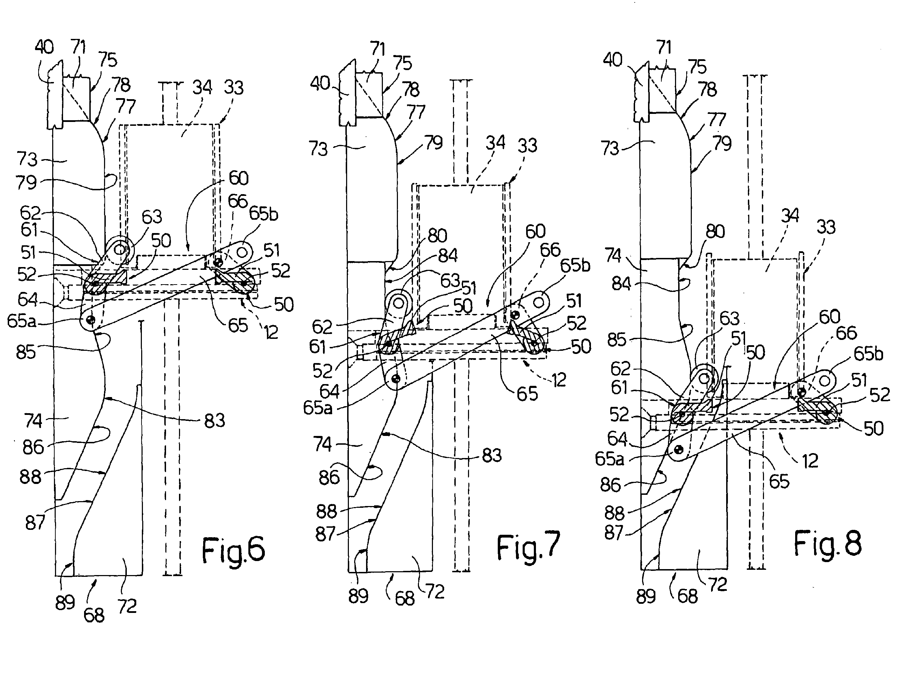

Pins 52 are fitted to rotate freely through main body 20 of jaw 12 (Figures 6, 7, 8), and have respective end portions 55 projecting from the rear of main body 20.

Pins 52 are counter-rotated, i.e. by equal angles in opposite directions so as to move tabs 51 symmetrically with respect to path A, by an articulated mechanism 60 (Figures 4, 6, 7, 8) at the back of main body 20.

More specifically, traction members 50 are movable by varying amounts between a first and second, respectively vertical and horizontal, limit position.

In the first limit position (Figure 3) traction members 50 are positioned with tabs 51 substantially vertical, i.e. parallel to the feed direction of tube 3 along path A, and do not interact with tube 3. In the second limit position (Figure 8), traction members 50 are positioned with tabs 51 substantially horizontal and close to heating member 29.

As they are moved, traction members 50 exert pull on tube 3 and, at the same time, fold the packaging material by varying amounts towards band 44 sealed by jaws 12 and 13 associated with traction members 50.

With reference to Figures 4, 6, 7, 8, mechanism 60 comprises a first-class control lever 61 fitted to end 55 of one of pins 52, which defines the fulcrum of lever 61 and is located, in use, on the side 7b side of frame 6.

Lever 61 comprises a first arm 62 fitted on the end with a cam follower roller 63 having an axis parallel to axes E of pins 52; and a second arm 64 hinged to one end 65a of a rod 65. Rod 65 extends crosswise to main body 20, intersects a plane containing axes E of pins 52, and is hinged, close to its opposite end 65b, to a rod 66 fitted to end portion 55 of the other pin 52.

A spring 67, fitted to main body 20, acts on the free end 65b of rod 65 to keep mechanism 60 normally in a rest configuration (Figure 4), in which lever 61 is almost horizontal, and cam follower roller 63 projects laterally outwards of jaw 12, i.e. on the opposite side of pin 52 of lever 61 to path A of tube 3.

Cam follower roller 63 cooperates with a partly variable profile cam assembly 68 (Figures 6 to 9) fitted to wall 8a, adjacent to a cam 40.

Cam assembly 68 is associated with a control assembly 69 - shown only partly and schematically in Figures 5 and 9 and described in detail in the Applicant's Patent Application EP-B-0887265 - which, together with cam assembly 68, forms part of a control device 70 for controlling the movement of traction members 50.

Cam assembly 68 substantially comprises a fixed top cam 71 and a fixed bottom cam 72 (Figure 9), which are substantially U-shaped and fitted about respective top and bottom edges of wall 8a to control the position of cam follower roller 63, and therefore of mechanism 60, at the opposite ends of path P of jaws 12. Cam assembly 68 also comprises a movable cam 73 and a fixed cam 74, which are located along wall 8a, inside gap 9, to control the position of cam follower roller 63 substantially along portion P2 of path P of jaws 12.

More specifically, fixed cam 71 is fitted to the top edge of wall 8a, laterally contacting a cam 40, and comprises, on the opposite side to cam 40, a rolling track 75, for cam follower roller 63, lying substantially in a vertical plane along its whole length except for a lead-in ramp portion 90 (Figure 9) located at the end of cam 71 outside wall 8a.

Movable cam 73 is fitted close to wall 8a, in an intermediate position between fixed top cam 71 and fixed cam 74, so as to slide in a plane parallel to wall 8a, and defines a substantially trapezoidal rolling track 77 defined by an up-ramp portion 78 adjacent to fixed cam 71, by a constant-lift intermediate portion 79, and by a down-ramp portion 80 adjacent to fixed cam 74.

Portions 78 and 80 are formed on respective end portions 81, 82 of movable cam 73 fitted respectively in sliding manner to fixed cam 71 and fixed cam 74 to maintain continuity between the cams.

Cam 73 is movable substantially parallel to wall 8a so as to adjust both the maximum lift of cam 73 defined by intermediate portion 79 of rolling track 77, and the points connecting cam 73 to fixed cams 71 and 74.

The position of movable cam 73 and, therefore, the amount by which traction members 50 are moved between the first and second limit position, are controlled in known manner, as stated, by control assembly 69.

According to an important aspect of the present invention, fixed cam 74 is shaped to produce, following the sealing operation performed by each pair of jaws 12 and 13, an additional, substantially complete movement of the respective pair of traction members 50 from the first to the second limit position, so as to fold the packaging material of tube 3 substantially completely towards the newly sealed band 44 of tube 3.

More specifically, as shown in Figures 6 to 9, fixed cam 74, connected rigidly to wall 8a, defines a rolling track 83 having, in succession, a substantially flat, vertical first portion 84 located closer to path A by a predetermined amount with respect to the plane of track 75 of fixed cam 71; an up-ramp second portion 85, along which traction members 50 are moved into the second limit position; and a down-ramp third portion 86 terminating substantially in the same plane as the start of lead-in portion 90 of cam 71.

Fixed bottom cam 72 is substantially a safety cam, and cooperates with cam follower roller 63 on the opposite side with respect to cams 71, 73 and 74, to ensure mechanism 60 is restored to the rest position shown in Figure 4. For which purpose, fixed cam 72 defines a rolling track 87 having, in succession with reference to path A, a first portion 88 substantially parallel to portion 86 of rolling track 83 of fixed cam 74; and a constant-lift portion 89 for maintaining cam follower roller 63 in position to engage lead-in portion 90 of cam 71.

Control assembly 69 is connected to a central control unit 91 for governing operation of unit 1, and which receives a signal S generated by an optical sensor 92 facing tube 3, upstream from where tube 3 interacts with jaws 12 and 13, and for detecting the presence of bar codes 5 of decorations 4.

Central control unit 91 compares the instant a bar code 5 is detected by optical sensor 92 with a time window defined by an internal "clock" of central control unit 91.

Unit 1 operates as follows.

The two conveyors 10, 11 are run in opposite directions, as indicated by the arrows in Figure 2, so that respective jaws 12, 13 cooperate with tube 3 of packaging material from the end of portions P1, Q1 of respective paths P, Q and along respective portions P2, Q2 with a law of motion defined by the profiles of cams 40, 41.

The work cycle will now be described in more detail with reference to one jaw 12 of conveyor 10 and the corresponding jaw 13 of conveyor 11, all the other jaws 12 and 13 obviously performing the same cycle at time intervals depending on the output rate.

Along portions P1 and Q1, jaws 12 and 13 are brought together to gradually deform and "flatten" tube 3 at a transverse band 44.

At the end of portions P1, Q1, devices 33 for controlling the volume of packages 2 are activated; and half-shells 34 of jaws 12 and 13 are brought together frontwards to define a parallelepiped-shaped cavity defining the volume of container portion 45 of the package 2 being formed.

Container portion 45 is connected to each sealing band 44 by two substantially trapezoidal connecting walls 95 (Figures 2 and 5) formed as tube 3 is gradually compressed by jaws 12 and 13 along portions P1, Q1 of respective paths P, Q; and walls 95 have respective sloping lateral edges 96, with which traction members 50 cooperate as of the end of portions P1, Q1, i.e. before the maximum gripping pressure is applied.

Along portions P2, Q2 of respective paths P, Q, jaws 12 and 13 are gripped firmly against tube 3; and heating member 29 is powered to seal the two superimposed portions of packaging material defining band 44.

The following is a detailed description of the way in which traction members 50 are controlled by cam assembly 68 and relative control assembly 69.

As jaw 12 travels along portion P1 of path P, cam follower roller 63 cooperates with fixed top cam 71, which first moves it from the rest position by means of portion 90, and then maintains it in an intermediate position by means of portion 75. The rotation of lever 61 caused by the movement of roller 63 rotates pin 52 of lever 61, and produces an equal opposite rotation of the other pin 52, to which motion is transmitted by the articulated inverted parallelogram system defined by arm 64, rod 65 and rod 66.

The rotation of pins 52 moves tabs 51 of traction members 50 towards tube 3.

When cam follower roller 63 reaches the up-ramp portion 78 of movable cam 73, lever 61 is gradually rotated further, so that, as stated above, tabs 51 of traction members 50 are moved further towards tube 3, and at this stage interact with edges 96 of walls 95 to "pull" tube 3 downwards. This takes place after sealing the band 44 of tube 3 gripped between heating member 29 and pressure bar 32 of jaws 12 and 13.

The extent of the action performed by tabs 51 depends on the position of movable cam 73, which is controlled by control device 69 governed by central control unit 91.

Central control unit 91 determines whether signal S from optical sensor 92 - indicating the presence of a bar code 5 - is generated within a predetermined time window, depending on an internal clock of central control unit 91.

If it is - meaning decorations 4 on the packaging material are positioned correctly - the configuration of cam 73 remains unchanged.

Conversely, if the instant in which bar code 5 is detected lags or leads with respect to the theoretic time window, central control unit 91 moves movable cam 73 towards or, respectively, away from tube 3, thus increasing or reducing the travel of tabs 51, and the pull and folding action exerted by tabs 51 on tube 3.

Once the action of tabs 51 is completed, the following jaws 12 and 13 seal the upstream band 44 of tube 3, thus completing the formation of a container portion 45 with the aid of volume control devices 33.

On leaving movable cam 73, cam follower roller 63 travels along the profile of fixed cam 74, portion 84 of which restores roller 63 to the intermediate position (Figure 7) and rotates traction members 50 into the first limit position, thus moving tabs 51 away from tube 3.

At this stage, half-shells 34 of jaws 12 and 13 begin opening, and, when cam follower roller 63 reaches up-ramp portion 85, traction members 50 are again rotated into the second limit position.

This rotation of traction members 50 folds the packaging material of tube 3 substantially completely towards the bottom sealing band 44 of the newly formed package 2, and flattens relative walls 95 substantially completely.

Along portion 86 of fixed cam 74, cam follower roller 63 is restored to a position corresponding to the rest configuration of mechanism 60, thus moving tabs 51 away from tube 3.

The profile of fixed bottom cam 72 ensures cam follower roller 63 is maintained in this position until jaw 12 finishes interacting with the packaging material.

Though control is described with reference to one jaw 12, jaws 12 of conveyor 10 obviously all interact successively with cam assembly 68, so that each is controlled to exert more or less pull on tube 3, and the position of cam 73 is adjusted with time, and by closed-loop control, to ensure decorations 4 are centred correctly on packages 2.

The advantages of the forming unit 1 and method according to the teachings of the present invention will be clear from the foregoing description.

In particular, by performing an additional substantially complete movement of relative traction members 50 after each package 2 is sealed, in addition to the movement performed to correct feed of tube 3 along path A, walls 95 of packages 2 coming off unit 1 can be folded perfectly, while at the same time still using traction members 50 to register the position of decorations 4 on respective packages 2.

The additional movement of traction members 50 provides for weakening the packaging material in the fold area of top walls 95 of packages 2.

The above additional operation only affects the package 2 with which traction members 50 are currently interacting, and not the next package 2, which is completely enclosed by the upstream jaws 12, 13 and relative half-shells 34.

Clearly, changes may be made to unit 1 as described herein without, however, departing from the scope of the accompanying Claims.

In particular, unit 1 may be of the type featuring two pairs of jaws acting cyclically and alternately on tube 3.

## Claims

1. A forming method for producing sealed packages (2) from a tube (3) of sheet packaging material fed along a feed path (A), filled continuously with a pourable food product, and having a succession of identical, equally spaced decorations (4); said method comprising, to form each said package (2), the successive steps of:
- gripping and sealing said tube (3) at a first cross section by means of a jaw assembly (12, 13);
- exerting, by means of traction means (50) located upstream from said jaw assembly (12, 13) and movable by varying amounts between two limit positions, an adjustable first pulling action on said tube (3) to correct feed of the tube along said feed path (A) in response to a signal (S) related to the position of said decorations (4) along the feed path (A), said first pulling action folding the packaging material by a varying amount towards the sealed said first cross section; and
- gripping and sealing said tube (3), at a second cross section located upstream from said first cross section, by means of another jaw assembly (12, 13);
**characterized by** comprising the further step of exerting, after sealing said second cross section by means of the relative said jaw assembly (12, 13), a second pulling action on said tube (3) by performing a substantially complete movement of said traction means (50) between said limit positions, so as to fold the packaging material of the tube (3) substantially completely towards the sealed said first cross section.

2. A method as claimed in Claim 1, **characterized by** comprising the step of controlling, by means of forming means (33), the volume of the portion (45) of said tube (3) of packaging material extending between said first and said second cross section, said controlling step being performed between said gripping step and said sealing step, and after said step of exerting said first pulling action on said tube (3) of packaging material.

3. A method as claimed in Claim 2, **characterized in that** said step of exerting said second pulling action on said tube (3) of packaging material is performed following release of said forming means (33).

4. A forming unit (1) for producing sealed packages (2) from a tube (3) of sheet packaging material fed along a feed path (A), filled continuously with a pourable food product, and having a succession of identical, equally spaced decorations (4), said unit (1) comprising:
- at least one pair of jaw assemblies (12, 13) movable cyclically and successively along part of said feed path (A) to grip and seal said tube (3) of packaging material at equally spaced cross sections defining opposite sealing bands (44) of said packages (2) being formed;
- traction means (50) associated with and located upstream from each said jaw assembly (12, 13), and movable between two limit positions to exert on said tube (3) of packaging material a pulling action along said feed path (A) and a folding action towards the downstream sealing band (44) of the package (2) being formed; and
- first control means (71, 73) for activating said traction means (50) following the gripping and sealing action of the jaw assembly (12, 13) associated with the traction means, and prior to the action of the next jaw assembly (12, 13), and for controlling the amount by which the traction means (50) are moved between said limit positions in response to a signal (S) related to the position of said decorations (4) along said feed path (A);
**characterized by** also comprising second control means (74) for again activating said traction means (50) following the gripping and sealing action of the jaw assembly (12, 13) following the one associated with the traction means, and for moving the traction means (50) substantially completely between said limit positions to fold the packaging material of the tube (3) substantially completely towards the downstream sealing band (44) of the package (2) being formed.

5. A unit as claimed in Claim 4, **characterized by** also comprising forming means (33) for controlling the volume of each portion (45) of said tube (3) of packaging material extending between two successive sealing bands (44).

6. A unit as claimed in Claim 4 or 5, **characterized in that** said traction means are carried movably by the relative jaw assembly (12, 13), and comprise a pair of traction members (50) cooperating on opposite sides of said tube (3) of packaging material; and a mechanism (60) for activating said traction members (50).

7. A unit as claimed in Claim 6, **characterized in that** said first and second control means comprise a first and a second cam (73, 74) arranged in succession and in substantially stationary positions along said feed path (A) of said tube (3), having a variable and fixed profile respectively, and interacting successively with said mechanisms (60) carried by said jaw assemblies (12, 13).

8. A unit as claimed in Claim 7, **characterized in that** said first control means comprise an optical sensor (92) facing said feed path (A) of said tube (3) of packaging material to detect indications (5) forming part of said decorations (4) on said packaging material; and a central control unit (91), which is connected to actuating means (69) for controlling the profile of said first cam (73), and generates control signals for said actuating means (69) in response to a comparison between respective instants in which said indications (5) are detected and a time reference.

9. A unit as claimed in any one of Claims 6 to 8, **characterized in that** said mechanism (60) for activating said traction members (50) comprises a single cam follower (63) cooperating with said first and said second cam (73, 74); and an articulated system (61, 65, 66) activating both said traction members (50) in response to a movement of said cam follower (63).

10. A unit as claimed in any one of Claims 4 to 9, **characterized by** comprising a first chain conveyor (10) having a number of first jaws (12) and defining an endless first path (P) of said first jaws (12); and a second chain conveyor (11) having a number of second jaws (13) and defining an endless second path (Q) of said second jaws (13); said first and said second path (P, Q) comprising respective work portions (P1, P2; Q1, Q2) adjacent to said feed path (A) of the tube (3) of packaging material and extending substantially symmetrically on opposite sides of said feed path (A), so that said first jaws (12) cooperate with respective said second jaws (13) to grip and seal said tube (3) at respective equally spaced transverse bands (44); each said first jaw (12) of said first conveyor (10) defining a relative said jaw assembly with the corresponding said second jaw (13) of said second conveyor (11).

## Patentansprüche

1. Formverfahren zum Herstellen versiegelter Verpackungen (2) aus einem Schlauch (3) aus bahnförmigem Verpackungsmaterial, der entlang eines Zuführpfads (A) befördert und kontinuierlich mit einem fließ- oder schüttfähigen Nahrungsmittel befüllt wird und eine Abfolge von identischen, gleich beabstandeten Dekors (4) hat, wobei das Verfahren, zur Bildung jeder Verpackung (2), die aufeinander folgenden Schritte umfasst:
- Ergreifen und Versiegeln des Schlauchs (3) an einem ersten Querschnitt mithilfe einer Backenanordnung (12, 13);
- Ausüben, mithilfe von Zugmitteln (50), die oberhalb der Backenanordnung (12, 13) angeordnet und um variierende Beträge zwischen den beiden Grenzstellungen bewegbar sind, einer einstellbaren ersten Zugwirkung auf den Schlauch (3), um das Zuführen des Schlauchs entlang des Zuführpfads (A) in Reaktion auf ein Signal (S) hin zu korrigieren, das sich auf die Position der Dekors (4) entlang des Zuführpfads (A) bezieht, wobei die erste Zugwirkung das Verpackungsmaterial um unterschiedliche Beträge in Richtung auf den versiegelten ersten Querschnitt faltet, und
- Ergreifen und Versiegeln des Schlauchs (3) an einem zweiten Querschnitt, der dem ersten Querschnitt vorgeordnet ist, mithilfe einer weiteren Backenanordnung (12, 13),
**gekennzeichnet durch** den weiteren Schritt des Ausübens, nach dem Versiegeln des zweiten Querschnitts durch die jeweilige Backenanordnung (12, 13), einer zweiten Zugwirkung auf den Schlauch (3), indem eine im Wesentlichen vollständige Bewegung der Zugmittel (50) zwischen zwei Grenzstellungen ausgeführt wird, um das Verpackungsmaterial des Schlauchs (3) im Wesentlichen vollständig in Richtung auf den versiegelten ersten Querschnitt zu falten.

2. Verfahren nach Anspruch 1, **dadurch gekennzeichnet, dass** darin enthalten ist der Schritt des Steuerns, mithilfe der Formmittel (33), des Volumens des Abschnitts (45) des Schlauchs (3) aus Verpackungsmaterial, der sich zwischen dem ersten und dem zweiten Querschnitt erstreckt, wobei der Steuerungsschritt zwischen dem Ergreifungsschritt und dem Versiegelungsschritt und nach dem Schritt des Ausübens der ersten Zugwirkung auf den Schlauch (3) aus Verpackungsmaterial durchgeführt wird.

3. Verfahren nach Anspruch 2, **dadurch gekennzeichnet, dass** der Schritt des Ausübens der zweiten Zugwirkung auf den Schlauch (3) aus Verpackungsmaterial im Anschluss an das Lösen der Formmittel (33) ausgeführt wird.

4. Formeinheit (1) zum Herstellen versiegelter Verpackungen (2) aus einem Schlauch (3) aus bahnförmigem Verpackungsmaterial, der entlang eines Zuführpfads (A) befördert und kontinuierlich mit einem fließ- oder schüttfähigen Nahrungsmittel befüllt wird, und der eine Abfolge von identischen, gleich beabstandeten Dekors (4) hat, wobei die Einheit (1) umfasst :
- wenigstens ein Paar Backenanordnungen (12, 13), die zyklisch und aufeinander folgend entlang eines Teils des Zuführpfads (A) bewegbar sind, um den Schlauch (3) aus Verpackungsmaterial an gleich beabstandeten Querschnitten zu ergreifen und zu versiegeln, die die gegenüber liegenden Dichtungsbänder (44) der Verpackungen (2), die gebildet werden, festlegen;
- Zugmittel (50), die mit jeder Backenanordnung (12, 13) zusammenhängen und ihr vorgeordnet sind, und die zwischen zwei Grenzstellungen bewegbar sind, um auf den Schlauch (3) aus Verpackungsmaterial eine Zugwirkung entlang des Zuführpfads (A) auszuüben und um einen Faltvorgang durchzuführen in Richtung auf das nachgeordnete Dichtungsband (44) der Verpackung (2), die gebildet wird; und
- erste Steuerungsmittel (71, 73) zum Betätigen der Zugmittel (50) im Anschluss an den Greif- und Versiegelungsvorgang der Backenanordnung (12, 13), die mit den Zugmittel zusammenhängt, und vor dem Einwirken der nächsten Backenanordnung (12, 13), und zum Steuern des Betrags, um den die Zugmittel (50) bewegt werden zwischen den Grenzstellungen in Reaktion auf ein Signal (S), das sich auf die Position der Dekors (4) entlang dem Zuführpfad (A) bezieht;
**dadurch gekennzeichnet, dass** sie ferner zweite Steuerungsmittel (74) enthält zum nochmaligen Betätigen der Zugmittel (50) im Anschluss an den Greif- und Versiegelungsvorgang der Backenanordnung (12, 13), die dem mit den Zugmitteln zusammenhängenden folgt, und zum Bewegen der Zugmittel (50) im Wesentlichen vollständig zwischen den Grenzstellungen, um das Verpackungsmaterial des Schlauchs (3) im Wesentlichen vollständig in Richtung auf das nachgeordnete Dichtungsband (44) der Verpackung (2), die gebildet wird, zu falten.

5. Einheit nach Anspruch 4, **dadurch gekennzeichnet, dass** sie ferner Formmittel (33) umfasst zum Steuern des Volumens jedes Abschnitts (45) des Schlauchs (3) aus Verpackungsmaterial, der sich zwischen zwei aufeinander folgenden Dichtungsbändern (44) erstreckt.

6. Einheit nach Anspruch 4 oder 5, **dadurch gekennzeichnet, dass** die Zugmittel von der jeweiligen Backenanordnung (12, 13) bewegbar transportiert werden und ein Paar Zugelemente (50) aufweisen, die auf gegenüber liegenden Seiten des Schlauches (3) aus Verpackungsmaterial zusammenwirken, sowie einen Mechanismus (60) zum Betätigen der Zugelemente (50).

7. Einheit nach Anspruch 6, **dadurch gekennzeichnet, dass** die ersten und zweiten Steuerungsmittel eine erste und eine zweite Nocke (73, 74) enthalten, die hintereinander und in im Wesentlichen ortsfesten Positionen entlang des Zuführpfads (A) des Schlauchs (3) angeordnet sind, wobei die eine Nocke ein variables und die andere ein festes Profil aufweist, und die nacheinander mit den von Backenanordnungen (12, 13) getragenen Mechanismen (50) zusammenwirken.

8. Einheit nach Anspruch 7, **dadurch gekennzeichnet, dass** die ersten Steuerungsmittel einen optischen Sensor (92) enthalten, der dem Zuführpfad (A) des Schlauchs (3) aus Verpackungsmaterial zugewandt ist, um Markierungen (5), die Teil der Dekors (4) auf dem Verpackungsmaterial bilden, zu erkennen; und eine zentrale Steuerungseinheit (91), die mit den Betätigungsmitteln (69) zum Steuern des Profils der ersten Nocke (73) verbunden ist, und die Steuerungssignale für die Betätigungsmittel (69) erzeugt in Reaktion auf einen Vergleich zwischen den entsprechenden Momenten, in denen die Markierungen (5) erkannt werden, und einer zeitlichen Referenz.

9. Einheit nach einem der Ansprüche 6 bis 8, **dadurch gekennzeichnet, dass** der Mechanismus (60) zum Betätigen der Zugelemente (50) einen einzigen Nockenmitnehmer (63) enthält, der mit der ersten und zweiten Nocke (73, 74) zusammenwirkt, sowie ein Gelenk- bzw. Gliedersystem (61, 65, 66), das beide Zugelemente (50) als Antwort auf eine Bewegung des Nockenmitnehmers (63) betätigt.

10. Einheit nach einem der Ansprüche 4 bis 9, **dadurch gekennzeichnet, dass** sie einen ersten Kettenförderer (10) enthält, der eine Anzahl erster Backen (12) hat und einen ersten Endlospfad (P) der ersten Backen (12) definiert, sowie einen zweiten Kettenförderer (11), der eine Anzahl zweiter Backen (13) hat und einen zweiten Endlospfad (Q) der zweiten Backen (13) definiert; wobei der erste und zweite Pfad (P, Q) entsprechende Arbeitsabschnitte (P1, P2; Q1, Q2) enthalten, die an den Zuführpfad (A) des Schlauchs (3) aus Verpackungsmaterial angrenzen und im Wesentlichen symmetrisch auf gegenüberliegenden Seiten des Zuführpfads (A) verlaufen, so dass die ersten Backen (12) mit den entsprechenden zweiten Backen (13) zusammenwirken, um den Schlauch (3) an jeweils gleich beabstandeten Querbändern (44) zu ergreifen und zu versiegeln, wobei jede erste Backe (12) des ersten Förderers (10) eine entsprechende Backenanordnung mit der korrespondierenden zweiten Backe (13) des zweiten Förderers (11) bildet.

## Revendications

1. Procédé de formation permettant de produire des emballages scellés (2) à partir d'un tube (3) en un matériau d'emballage en feuille entraîné le long d'une voie d'alimentation (A), rempli en continu d'un produit alimentaire liquide, et comportant une succession de décorations identiques espacées à intervalles égaux (4) ; ledit procédé comprenant, afin de former chaque dit emballage (2), les étapes successives consistant à :
saisir et sceller chaque dit tube (3) au niveau d'une première section transversale au moyen d'un assemblage de mâchoires (12, 13) ;
exercer, au moyen d'un moyen de traction (50) situé en amont dudit assemblage de mâchoires (12, 13) et pouvant se déplacer de quantités variables entre deux positions limites, une première action de traction réglable sur ledit tube (3) pour corriger l'avancée du tube le long de ladite voie d'alimentation (A) en réponse à un signal (S) concernant la position desdites décorations (4) le long de la voie d'alimentation (A), ladite première action de traction pliant le matériau d'emballage d'une quantité variable en direction de ladite section transversale scellée ; et
saisir et sceller ledit tube (3), au niveau d'une seconde section transversale située en amont de ladite première section transversale, au moyen d'un autre assemblage de mâchoires (12, 13) ;
**caractérisé en ce qu'**il comprend l'étape supplémentaire consistant à exercer, après le scellement de ladite seconde section transversale au moyen dudit assemblage de mâchoires associé (12, 13), une seconde action de traction sur ledit tube (3) en effectuant un déplacement sensiblement complet dudit moyen de traction (50) entre lesdites positons limites, de façon à plier le matériau d'emballage du tube (3) sensiblement complètement en direction de ladite première section transversale scellée.

2. Procédé selon la revendication 1, **caractérisé en ce qu'**il comprend l'étape consistant à contrôler, au moyen d'un moyen de formation (33), le volume de la partie (45) dudit tube (3) de matériau d'emballage s'étendant entre lesdites première et seconde sections transversales, ladite étape de contrôle étant exécutée entre ladite étape de saisie et ladite étape de scellement, et après ladite étape consistant à exercer ladite première action de traction sur ledit tube (3) de matériau d'emballage.

3. Procédé selon la revendication 2, **caractérisé en ce que** ladite étape consistant à exercer ladite seconde action de traction sur ledit tube (3) de matériau d'emballage est exécutée à la suite de la libération dudit moyen de formation (33).

4. Unité de formation (1) destinée à produire des emballages scellés (2) à partir d'un tube (3) en un matériau d'emballage en feuille entraîné le long d'une voie d'alimentation (A), rempli en continu d'un produit alimentaire liquide, et comportant une succession de décorations identiques espacées à intervalles égaux (4), ladite unité (1) comprenant :
au moins une paire d'assemblages de mâchoires (12, 13) pouvant se déplacer cycliquement et successivement le long d'une partie de ladite voie d'alimentation (A) pour saisir et sceller ledit tube (3) de matériau d'emballage au niveau de sections transversales espacées à intervalles égaux définissant des bandes de scellement opposées (44) desdits emballages (2) en formation ;
un moyen de traction (50) associé à et situé en amont de chaque dit assemblage de mâchoires (12, 13) et pouvant se déplacer entre deux positions limites pour exercer sur ledit tube (3) de matériau d'emballage une action de traction le long de ladite voie d'alimentation (A) et une action de pliage en direction de la bande de scellement aval (44) de l'emballage (2) en formation ; et
un premier moyen de contrôle (71, 73) pour activer ledit moyen de traction (50) à la suite de l'action de saisie et de scellement de l'assemblage de mâchoires (12, 13) associé au moyen de traction, et avant l'action de l'assemblage de mâchoires suivant (12, 13), et pour contrôler la quantité selon laquelle le moyen de traction (50) est déplacé entre lesdites positions limites en réponse à un signal (S) associé à la position desdites décorations (4) le long de ladite voie d'alimentation (A) ;
**caractérisée en ce qu'**elle comprend en outre un second moyen de contrôle (74) pour activer de nouveau ledit moyen de traction (50) à la suite de l'action de saisie et de scellement de l'assemblage de mâchoires (12, 13) à la suite de celle associée au moyen de traction, et pour déplacer le moyen de traction (50) sensiblement complètement entre lesdites positions limites pour plier le matériau d'emballage du tube (3) sensiblement complètement en direction de la bande de scellement aval (44) de l'emballage (2) en formation.

5. Unité selon la revendication 4, **caractérisée en ce qu'**elle comprend aussi un moyen de formation (33) pour contrôler le volume de chaque partie (45) dudit tube (3) de matériau d'emballage s'étendant entre deux bandes de scellement (44) successives.

6. Unité selon la revendication 4 ou 5, **caractérisée en ce que** ledit moyen de traction est porté de façon mobile par l'assemblage de mâchoires associé (12, 13) et comprend une paire d'organes de traction (50) coopérant sur des côtés opposés dudit tube (3) de matériau d'emballage ; et un mécanisme (60) pour activer lesdits organes de traction (50).

7. Unité selon la revendication 6, **caractérisée en ce que** lesdits premier et second moyens de contrôle comprennent une première et une seconde cames (73, 74) disposées en succession et dans des positons sensiblement fixes le long de ladite voie d'alimentation (A) dudit tube (3), ayant respectivement un profil variable et un profil fixe, et interagissant successivement avec lesdits mécanismes (60) portés par lesdits assemblages de mâchoires (12, 13).

8. Unité selon la revendication 7, **caractérisée en ce que** ledit premier moyen de contrôle comprend un capteur optique (92) faisant face à ladite voie d'alimentation (A) dudit tube (3) de matériau d'emballage pour détecter des indications (5) faisant partie desdites décorations (4) sur ledit matériau d'emballage ; et une unité de commande centrale (91) qui est connectée à un moyen d'actionnement (69) pour contrôler le profil de ladite première came (73), et qui génère des signaux de commande pour ledit moyen d'actionnement (69) en réponse à une comparaison entre des instants respectifs auxquels lesdites indications (5) sont détectées et un temps de référence.

9. Unité selon l'une quelconque des revendications 6 à 8, **caractérisée en ce que** ledit mécanisme (60) activant lesdits organes de traction (50) comprend un unique galet suiveur (63) coopérant avec lesdites première et seconde cames (73, 74) ; et un système articulé (61, 65, 66) activant les deux dits organes de traction (50) en réponse à un déplacement dudit galet suiveur (63).

10. Unité selon l'une quelconque des revendications 4 à 9, **caractérisée en ce qu'**un premier transporteur à chaîne (10) comportant un certain nombre de premières mâchoires (12) et définissant une première voie sans fin (P) desdites premières mâchoires (12) ; et un second transporteur à chaîne (11) comportant un certain nombre de secondes mâchoires (13) et définissant une seconde voie sans fin (Q) desdites secondes mâchoires (13) ; lesdites première et seconde voie (P, Q) comprenant des parties de travail respectives (P1, P2 ; Q1, Q2) adjacentes à ladite voie d'alimentation (A) du tube (3) de matériau d'emballage et s'étendant sensiblement symétriquement sur des côtés opposés de ladite voie d'alimentation (A), de façon à ce que lesdites premières mâchoires (12) coopèrent avec lesdites secondes mâchoires (13) respectives pour saisir et sceller ledit tube (3) au niveau de bandes de scellement respectives (44) espacées à intervalles égaux ; chaque dite première mâchoire (12) dudit premier convoyeur (10) définissant un dit assemblage de mâchoires respectif avec ladite seconde mâchoire (13) correspondante dudit second convoyeur (11).
